# EUROPÄISCHE PATENTSCHRIFT

(11) **EP 2 048 489 B1**
(45) Veröffentlichungstag und Bekanntmachung des Hinweises auf die Patenterteilung: **04.09.2013**
(21) Anmeldenummer: 08017707.4
(22) Anmeldetag: 09.10.2008
(51) Int. Cl.: G01N 19/02, B60T 8/172

(54) **Leichtkraftfahrzeug mit einer Messeinrichtung zum Messen der Griffigkeit der Oberfläche der Fahrbahn**
Lightweight vehicle having a measuring device for monitoring the road surface friction
Véhicule automobile léger ayant un dispositif de mesure du frottement à la surface d'une route

(30) Priorität: 10.10.2007 DE 102007048764
(43) Veröffentlichungstag der Anmeldung: 15.04.2009
(73) Patentinhaber: Institut für Baustoffe und Umwelt Lauta GmbH & Co., 02991 Lauta bei Hoyerswerda (DE)
(72) Erfinder: Freiherr von Arnim, Nicolas, 31319 Sehnde / OT Höver (DE)
(74) Vertreter: Siekmann, Gunnar

(56) Entgegenhaltungen:
- WO-A2-2007/106204
- DE-A1-102004 033 827
- DE-B1- 1 648 399
- US-A- 2 690 668
- US-A- 4 212 063
- US-A- 4 662 211
- US-A1- 2001 006 002
- US-A1- 2002 046 594

## Beschreibung

Die Erfindung betrifft ein Leichtfahrzeug mit einer Baulänge von etwa 3 Metern und einer Breite von etwa 1,50 Metern.

Personenkraftwagen dienen zum Befördern von Personen und Gegenständen. Sie zeichnen sich in Europa durch eine Baugröße von etwa 3 m bis 5 m aus, zudem wird eine Breite von etwa von 1,50 m bis 2,10 m gehalten.

Neben Personenkraftwagen sind Leichtkraftfahrzeuge mit entsprechenden Abmessungen bekannt, die zum Transport von Gegenständen und Gütern dienen. Derartig schmale und kurze z. B. Kastenwagen werden von vielen Dienstleistern benutzt.

Die DE 10 2004 033 827 A1 zeigt ein derartiges Leichtkraft-fahrzeug für den Personentransport.

Aus der DE 1 648 399 ist eine Vorrichtung zum Ermitteln und Messen der Glätte eines Straßenbelages oder der gleichen bekannt. Diese Vorrichtung nutzt einen Kombinations kraftwagen, an dessen Chassis zwei Meßrädes angebracht werden.

Der Erfindung liegt die Aufgabe zugrunde, ein selbst fahrendes Leichtkraftfahrzeug der eingangs genannten Gattung in der Weise auszubilden, daß es für die Untersuchung von Fahrbahnoberflächen geeignet ist.

Diese Aufgabe ist erfindungsgemäß dadurch gelöst, daß das Leichtkraftfahrzeug einen Bauraum zur Aufnahme einer Meßeinrichtung zum Messen der Griffigkeit der Oberfläche der befahrenen Fahrbahn aufweist sowie weitere Merkmale aus dem Kennzeichen Von Patentanspruch 1 aufweist.

Mit dem erfindungsgemäßen Leichtkraftfahrzeug ist ein Messen der Griffigkeit der Oberfläche der Fahrbahn ermöglicht. Fahrzeuge mit derartigen Meßeinrichtungen sind grundsätzlich bekannt, sie weisen jedoch jeweils die Baugröße eines Lastkraftwagens auf. Mit derartig bekannten Griffigkeitsmessungs-Fahrzeugen können Bundesstraßen und Autobahnen problemlos untersucht werden, allerdings sind derartige Fahrzeuge nicht einsetzbar in schmalen Straßen, wie sie regelmäßig im nachgeordneten Straßennetz anzutreffen sind. Auch bei Straßen mit Fahrbahneinengungen und anderen Fahrbahnquerschnitten sind LKW-große Griffigkeitsmeßfahrzeuge schlecht einsetzbar.

Das erfindungsgemäße Leichtkraftfahrzeug ist aufgrund seiner reduzierten Baugröße dagegen in der Lage, auch schmale und schmalste Fahrbahnquerschnitte zu untersuchen. Auch andere schwierige Tangentenführungen, wie beispielsweise Serpentinen, können untersucht werden. Das Messen von Griffigkeiten der Oberfläche von Fahrbahnen ist mit Hilfe des erfindungsgemäßen Leichtkraftfahrzeuges somit auf räumliche Bereiche ausdehnbar, in denen bisher eine Griffigkeitsuntersuchung nicht möglich war.

Nach der Erfindung ist vorgesehen, daß der Bauraum im Bereich einer Fahrzeuglängsseite angeordnet ist. Im Bereich der Fahrzeuglängsseite ist ein Zugang zum Chassis des Leichtkraftfahrzeuges gegeben. Hier können in einfacher Weise Bauteile der Meßeinrichtung zum Messen der Griffigkeit angeordnet sein.

Nach der Erfindung ist vorgesehen, daß in dem Bauraum in einer Hebelmechanik zumindest ein Meßrad der Meßeinrichtung in einem Winkel von etwa 20° zur Fahrzeuglängsmittelachse gehalten ist. Nach dieser Weiterbildung umfaßt die Meßeinrichtung eine Hebelmechanik für ein Meßrad. Das Meßrad ist an dieser Hebelmechanik höhenveränderbar in Bezug auf die Oberfläche der befahrenden Fahrbahn gehalten.

Eine feste Zuordnung ist beim Meßrad in Bezug zur Fahrzeuglängsmittelachse gegeben, die Schrägstellung beträgt etwa 20°. Das Meßrad wird also schräg gestellt über die Fahrbahn gezogen. Dabei auf das Rad in Folge der Winkelstellung einwirkende Seitenkräfte werden von der Meßeinrichtung erfaßt. Das Meßrad weist eine kompakte Baugröße auf, es ist z. B. ein 10-Zoll-Meßrad.

Die Hebelmechanik weist nach der Erfindung ein am Fahrzeugchassis angeschlagenes Lager sowie einen in diesem Lager schwenkbar gelagerten Tragarm für das Meßrad auf, wobei die Bauteile dieser Hebelmechanik aus einer Leichtmetalllegierung gefertigt sind. Die Fertigung aus der Leichtmetalllegierung schafft einen Gewichtsvorteil, um die begrenzte Zuladung des Leichtkraftfahrzeuges nicht zu überschreiten. Der Tragarm ist im Lager schwenkbar gelagert, mit diesem Tragarm kann also das Meßrad der Fahrbahn mehr oder weniger weit angenähert werden. Durch ein Verschwenken des Tragarmes kann das Rad zudem Unebenheiten im Straßenverlauf folgen.

Die verwendete Leichtmetalllegierung ist z. B. eine Aluminiumlegierung oder eine Magnesiumlegierung.

Nach der Erfindung umfaßt die Hebelmechanik weiterhin einen auf den Tragarm einwirkenden Arbeitszylinder. Mit dem Arbeitszylinder kann auf den Tragarm eine Kraft aufgebracht werden, um das Meßrad über die wirksamen Gewichtskräfte hinaus an die Oberfläche der Fahrbahn anzudrücken. Für vergleichbare Messungen ist es erforderlich, eine definierte Aufstandslast am Meßrad zu erzeugen. Diese Auflast beträgt beispielsweise etwa 50 kg, sie ist gegenüber der Auflast großer Meßfahrzeuge verkleinert. Die erhaltenden Seitenkraftmeßwerte können aufgrund der Kenntnisse über die Größe der Auflast in Griffigkeitswerte umgerechnet werden, die den Kennwerten der großen Meßfahrzeuge vergleichbar sind. Die reduzierte Auflast von 50 kg kann durch einen auf dem Leichtkraftfahrzeug angeordneten Kessel erzeugt werden. Aufgrund der mittels Arbeitszylinder aufgebrachten geringeren Auflast des Meßrades sind exakte Meßwerte beispielsweise über Meßstrecken von 1 m, 10 m, 20 m und 100 m erzielbar.

Der Arbeitszylinder ist bevorzugt ein Pneumatikzylinder. Möglich ist auch der Einsatz eines Hydraulikzylinders. Vorzugsweise steht der Arbeitszylinder etwa vertikal auf dem Tragarm auf, vorzugsweise zudem im Bereich der Achse des Meßrades. Durch diese Anordnung wird die von Arbeitszylinder bereitgestellte Auflast direkt über das Meßrad auf die Fahrbahn übertragen. Die Federkennlinie des Arbeitszylinders als auch die Auflast selbst sind einstellbar.

Die Meßeinrichtung umfaßt vorzugsweise Dehnmeßstreifen als Kraftmeßsensoren. Während in großen Meßfahrzeugen Kraftmeßdosen eingesetzt werden, erfolgt auf dem Leichtkraftfahrzeug ein gewichts- und platzsparender Einsatz der Dehnmeßstreifen. Reibungsverluste in der Meßeinrichtung werden durch die Verwendung von Dehnmeßstreifen direkt am Träger reduziert, so daß exakte Ergebnisse erhaltbar sind.

Zur weiteren Ausbildung der Erfindung kann vorgesehen sein, daß die Meßeinrichtung eine Meßwerterfassung aufweist, wobei diese Meßwerteerfassung in einem Fahrzeugführerhaus angeordnet ist. Die Anordnung kann dabei in einem DIN-Radioschacht erfolgen, indem in diesem Radioschacht Teile einer Datenverarbeitungsanlage angeordnet sind.

Schließlich kann nach einer Weiterbildung der Erfindung noch vorgesehen sein, daß eine Wasservorlageeinrichtung mittels eines eigenen Arbeitszylinders gehoben und in die Arbeitsposition gelenkt wird. Für Griffigkeitsmessungen wird die zu vermessende Fahrbahn angefeuchtet. Trotz der Ausbildung des Fahrzeuges als Leichtkraftfahrzeug ist noch ein ausreichendes Wasservolumen mitführbar und in die Arbeitsposition lenkbar. Für die Bevorratung des Wassers kann im hinteren Bereich des Laderaums wenigstens ein Wassertank angeordnet sein.

Zudem ist für das Leichtkraftfahrzeug vorzugsweise noch eine Sicherheitskennzeichnung vorgesehen, welche Signalleuchten aufweist.

Ein Ausführungsbeispiel der Erfindung, aus dem sich weitere erfinderische Merkmale ergeben, ist in der Zeichnung dargestellt. Es zeigen:
- Fig. 1: eine Teilseitenansicht eines Leichtkraftfahrzeuges;
- Fig. 2: eine Teilseitenansicht des Leichtkraftfahrzeuges gemäß Fig. 1 mit Bauteilen einer Meßeinrichtung; und
- Fig. 3: eine Draufsicht auf Bauteile der Meßeinrichtung gemäß Fig. 2.

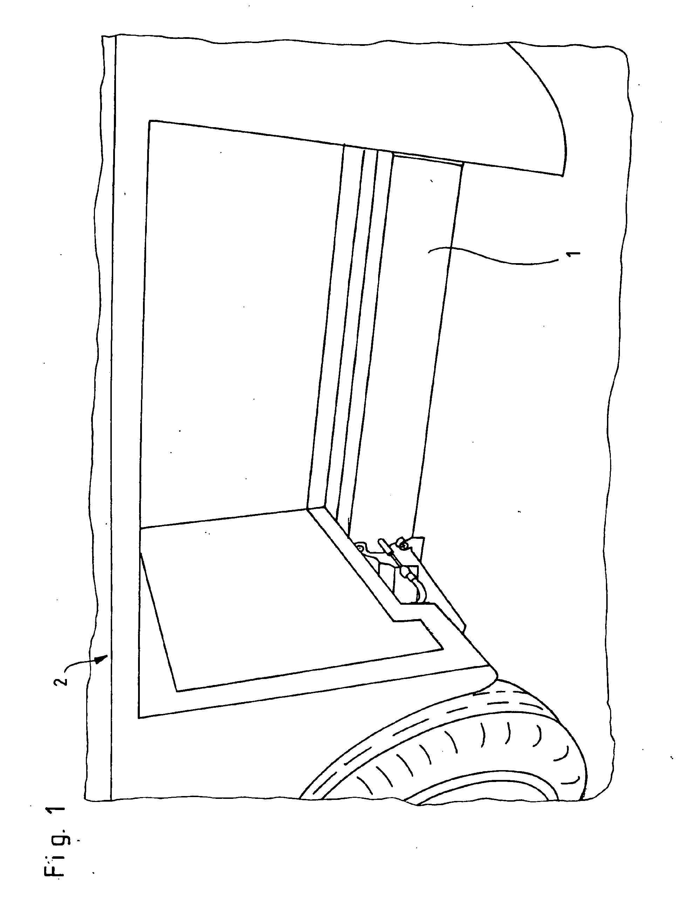

Das Leichtkraftfahrzeug in Fig. 1 hat etwa die Baugröße eines Personenkraftwagens. Es weist ein Chassis auf, von diesem Chassis ist ein Längsträger 1 in Fig. 1 dargestellt. Der Längsträger 1 ist im Bereich eines Bauraumes 2 sichtbar, dieser Bauraum 2 wird nach der Erfindung für die Anordnung einer Meßeinrichtung zum Messen der Griffigkeit der Oberfläche der befahrenen Fahrbahn genutzt.

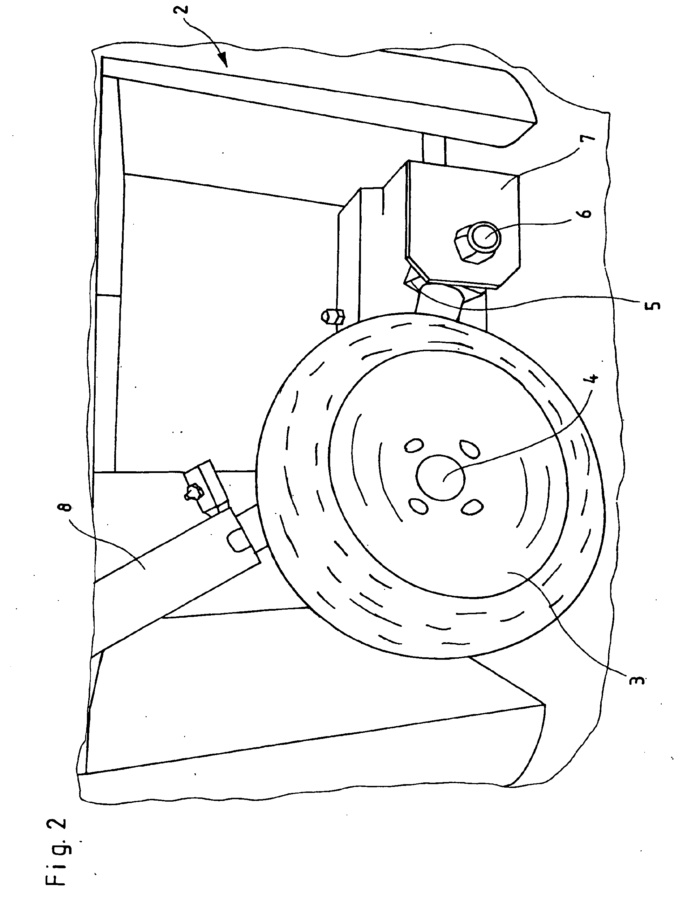

In Fig. 2 ist das Ausfüllen des Bauraumes 2 mit Bauteilen dieser Meßeinrichtung gezeigt. Die Meßeinrichtung umfaßt ein Meßrad 3, das über eine Radachse 4 an einem Tragarm 5 gehalten ist. Der Tragarm 5 ist wiederum über eine Tragarmachse 6 an einem Lager 7 gehalten, wobei das Lager 7 am Längsträger 1 des Leichtkraftfahrzeuges befestigt ist.

Die Meßeinrichtung umfaßt weiterhin einen Arbeitszylinder 8. Dieser Arbeitszylinder 8 wirkt von oben auf den Tragarm 5 ein und belastet diesen mit einer Auflast. Aufgrund dieser Auflast wird das Meßrad 3 gegen die Fahrbahn des Leichtkraftfahrzeuges geführt.

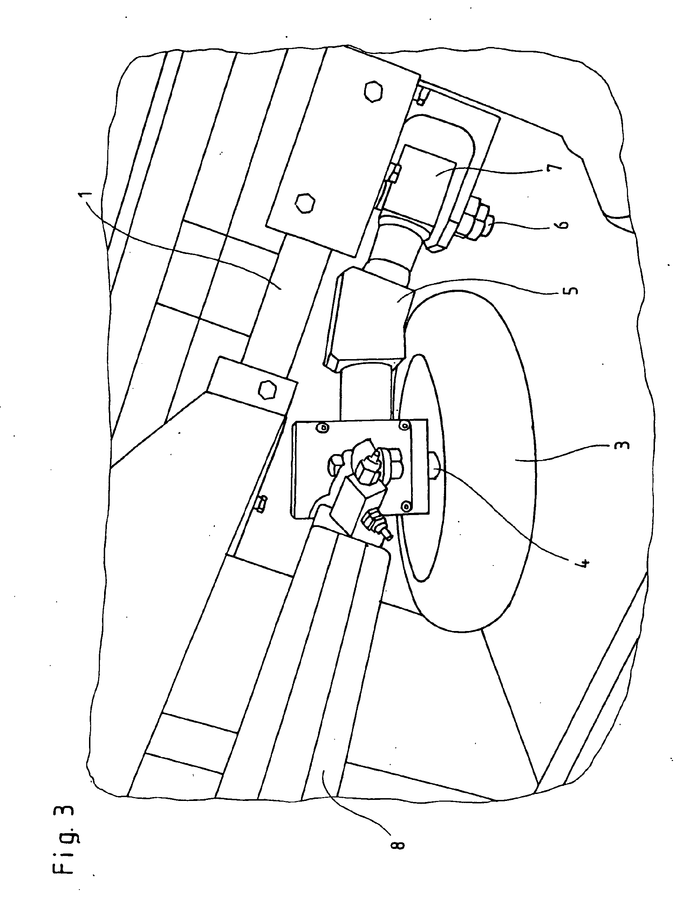

Insbesondere Fig. 3 ist entnehmbar, daß das Meßrad 3 in einem spitzen Winkel zur Längsmitteachse angestellt ist. Der Winkel ist durch eine abgewinkelte Ausbildung des Tragarms 5 bereitgestellt.

Der Ansatz des Arbeitszylinders 8 auf dem Tragarm 5 erfolgt im Bereich der Radachse 4 des Meßrades 3.

Die das Meßrad 3 aufnehmenden Bauteile der Meßeinrichtung sind aus einer Leichtmetalllegierung gefertigt, beispielsweise aus einer Aluminiumlegierung oder einer Magnesiumlegierung.

Auf dem Meßrad 3 wird vorzugsweise ein 10 zoll-großer Slickreifen eingesetzt. Das Leichtkraftfahrzeug weist Abmessungen von etwa 3 m Länge und 1,50 m Breite auf.

Die Meßgeschwindigkeiten können 40 km/h, 60 km/h bis maximal 80 km/h betragen. Mit diesen Abmessungen und den verschiedenen Meßgeschwindigkeiten können auch enge Straßen, wie Kreisverkehre oder engste Kurvenradien, untersucht werden.

## Patentansprüche

1. Leichtkraftfahrzeug mit einer Baulänge von etwa 3 Metern und einer Breite von etwa 1,50 Metern,
**dadurch gekennzeichnet,**
**dass** es einen im Bereich einer Fahrzeuglängsseite angeordneten Bauraum (2) zur Aufnahme einer Messeinrichtung zum Messen der Griffigkeit der Oberfläche der befahrenen Fahrbahn aufweist, wobei in dem Bauraum (2) in einer Hebelmechanik zumindest ein Messrad (3) der Messeinrichtung in einem Winkel von etwa 20° zur Fahrzeuglängsmittelachse gehalten ist und wobei die Hebelmechanik ein am Fahrzeugchassis angeschlagenes Lager (7) sowie einen in diesem Lager (7) schwenkbar gelagerten Tragarm (5) für das Messrad (3) aufweist, wobei diese Bauteile der Hebelmechanik aus einer Leichtmetalllegierung gefertigt sind, und dass die Hebelmechanik einen auf den Tragarm (5) einwirkenden Arbeitszylinder (8) umfasst, mit dem eine
Aufstandslast am Messrad von etwa 50 kg bewirkt durch einen einstellbaren Anpressdruck bereitgestellt ist.

2. Leichtkraftfahrzeug nach Anspruch 1, **dadurch gekennzeichnet, daß** die Leichtmetallegierung eine Aluminiumlegierung oder eine Magnesiumlegierung ist.

3. Leichtkraftfahrzeug nach Anspruch 1 oder 2, **dadurch gekennzeichnet, daß** die Federkennlinie des Arbeitszylinders (8) einstellbar ist.

4. Leichtkraftfahrzeug nach einem der Ansprüche 1 bis 3, **dadurch gekennzeichnet, daß** der Arbeitszylinder (8) ein Pneumatikzylinder ist.

5. Leichtkraftfahrzeug nach einem der Ansprüche 1 bis 4, **dadurch gekennzeichnet, daß** der Arbeitszylinder (8) im Bereich der Achse (4) des Meßrades (3) auf dem Tragarm (5) aufsteht.

6. Leichtkraftfahrzeuges nach einem der vorherigen Ansprüche, **dadurch gekennzeichnet, daß** die Meßeinrichtung Dehnmeßstreifen als Sensoren umfaßt.

7. Leichtkraftfahrzeug nach einem der vorhergehenden Ansprüche, **dadurch gekennzeichnet, daß** die Meßeinrichtung eine Meßwerteerfassung aufweist, wobei diese Meßwerteerfassung in einem Fahrzeugführerhaus angeordnet ist.

8. Leichtkraftfahrzeug nach Anspruch 7, **dadurch gekennzeichnet, daß** die Meßwerteerfassung eine teilweise in einem DIN-Radioschacht angeordnete Datenverarbeitungsanlage umfaßt.

9. Leichtkraftfahrzeug nach einem der vorhergehenden Ansprüche, **dadurch gekennzeichnet, daß** eine Wasservorlageeinrichtung mittels eines eigenen Arbeitszylinders gehoben und in die Arbeitsposition gelenkt werden kann.

10. Leichtkraftfahrzeug nach Anspruch 9, **dadurch gekennzeichnet, daß** im hinteren Bereich eines Laderaumes eine Bevorratung in wenigstens einem Wassertank verstaut ist.

11. Leichtkraftfahrzeug nach einem der vorhergehenden Ansprüche, **dadurch gekennzeichnet, daß** Signalleuchten für eine bezüglich der Stromaufnahme optimierte Sicherheitskennzeichnung vorgesehen sind.

## Claims

1. A light motor vehicle with an overall length of approximately 3 metres and a width of approximately 1.50 metres,
**characterized in that**
it has an installation space (2), arranged in the region of a longitudinal side of the vehicle, to receive a measuring device for measuring the grip of the surface of the roadway which is travelled on, wherein in the installation space (2) at least one measuring wheel (3) of the measuring device is held in a lever mechanism in an angle of approximately 20° to the longitudinal centre axis of the vehicle and wherein the lever mechanism has a bearing (7) attached to the vehicle chassis and has a support arm (5), pivotably mounted in this bearing (7), for the measuring wheel (3), wherein these components of the lever mechanism are produced from a light metal alloy, and that the lever mechanism comprises an operating cylinder (8) acting on the support arm (5), by which a contact load on the measuring wheel of approximately 50 kg is provided, brought about by an adjustable contact pressure.

2. The light motor vehicle according to Claim 1, **characterized in that** the light metal alloy is an aluminium alloy or a magnesium alloy.

3. The light motor vehicle according to Claim 1 or 2, **characterized in that** the spring characteristic of the operating cylinder (8) is adjustable.

4. The light motor vehicle according to one of Claims 1 to 3, **characterized in that** the operating cylinder (8) is a pneumatic cylinder.

5. The light motor vehicle according to one of Claims 1 to 4, **characterized in that** the operating cylinder (8) stands on the support arm (5) in the region of the axis (4) of the measuring wheel (3).

6. The light motor vehicle according to one of the preceding claims, **characterized in that** the measuring device comprises strain gauges as sensors.

7. The light motor vehicle according to one of the preceding claims, **characterized in that** the measuring device has a data acquisition arrangement, wherein this data acquisition arrangement is arranged in a vehicle driver's cab.

8. The light motor vehicle according to Claim 7, **characterized in that** the data acquisition arrangement comprises a data processing system arranged partially in a DIN radio slot.

9. The light motor vehicle according to one of the preceding claims, **characterized in that** a water receiver arrangement can be raised by means of its own operating cylinder and directed into the operating position.

10. The light motor vehicle according to Claim 9, **characterized in that** in the rear region of a loading space a store is stowed in at least one water tank.

11. The light motor vehicle according to one of the preceding claims, **characterized in that** signal lamps are provided for an optimised safety sign with respect to the current consumption.

## Revendications

1. Voiture urbaine avec une longueur hors tout d'environ 3 mètres et une largeur d'environ 1,50 mètres,
**caractérisée en ce que**
elle présente un espace exploitable (2) disposé au niveau d'un côté longitudinal du véhicule pour recevoir un dispositif de mesure pour mesurer la tenue au sol de la surface de la voie routière parcourue, dans laquelle dans l'espace exploitable (2) dans une mécanique de levier au moins une roue de compteur (3) du dispositif de mesure est maintenue à un angle d'environ 20° par rapport à l'axe central longitudinal du véhicule et dans laquelle la mécanique de levier présente un palier (7) monté sur le châssis de véhicule ainsi qu'un bras porteur (5) destiné à la roue de compteur (3) positionné de manière pivotante dans ce palier (7), dans laquelle ces composants de la mécanique de levier sont fabriqués dans un alliage de métal léger, et **en ce que** la mécanique de levier comprend un vérin (8) agissant sur le bras porteur (5), avec lequel une charge d'attaque sur la roue de compteur d'environ 50 kg provoquée par une pression de pressage réglable est fournie.

2. Voiture urbaine selon la revendication 1, **caractérisée en ce que** l'alliage de métal léger est un alliage d'aluminium ou un alliage de magnésium.

3. Voiture urbaine selon les revendications 1 ou 2, **caractérisée en ce que** la courbe caractéristique de ressort du vérin (8) peut être réglée.

4. Voiture urbaine selon une des revendications 1 à 3, **caractérisée en ce que** le vérin (8) est un vérin pneumatique.

5. Voiture urbaine selon une des revendications 1 à 4, **caractérisée en ce que** le vérin (8) se dresse au niveau de l'axe (4) de la roue de compteur (3) sur le bras porteur (5).

6. Voiture urbaine selon une des revendications précédentes, **caractérisée en ce que** le dispositif de mesure comprend des jauges d'extensométrie comme capteurs.

7. Voiture urbaine selon une des revendications précédentes, **caractérisée en ce que** le dispositif de mesure présente une unité de saisie de valeurs de mesure, dans laquelle cette unité de saisie de valeurs de mesure est disposée dans une cabine de conducteur du véhicule.

8. Voiture urbaine selon la revendication 7, **caractérisée en ce que** l'unité de saisie de valeurs de mesure comprend une installation de traitement de données partiellement disposée dans un boîtier radio DIN.

9. Voiture urbaine selon une des revendications précédentes, **caractérisée en ce que** un dispositif de collecte d'eau est soulevé au moyen d'un vérin propre et peut être incliné dans la position de travail.

10. Voiture urbaine selon la revendication 9, **caractérisée en ce que** dans la zone arrière d'un espace de chargement, un stock est arrimé dans au moins un réservoir d'eau.

11. Voiture urbaine selon une des revendications précédentes, **caractérisée en ce que** des lampes de signalisation sont prévues en vue d'une signalisation de sécurité optimisée en ce qui concerne la consommation électrique.
